# EUROPÄISCHE PATENTSCHRIFT

(11) **EP 0 767 140 B1**
(45) Veröffentlichungstag und Bekanntmachung des Hinweises auf die Patenterteilung: **03.06.1998**
(21) Anmeldenummer: 96115342.6
(22) Anmeldetag: 25.09.1996
(51) Int. Cl.: C01F 11/24, C01D 3/08, C21D 1/46, C01F 7/30

(54) **Verfahren zur Wiedergewinnung der Salzbestandteile aus Härtereisalzbädern**
Process for the recovery of salt components from hardening salt baths
Procédé pour la récupération des constituants salins des bains de sels de durcissement

(30) Priorität: 06.10.1995 DE 19537198
(43) Veröffentlichungstag der Anmeldung: 09.04.1997
(73) Patentinhaber: Durferrit GmbH Thermotechnik, D-68169 Mannheim (DE)
(72) Erfinder: Kremer, Matthias, Dr., 65185 Wiesbaden (DE); Wahl, Georg, 63517 Rodenbach (DE); Gock, Eberhard, Prof. Dr., 38640 Goslar (DE); Wigger, Stefan, 38678 Clausthal-Zellerfeld (DE); Kähler, Jörg, Dr., 38678 Clausthal-Zellerfeld (DE)
(74) Vertreter: Weber, Wolfgang

(56) Entgegenhaltungen:
- DE-C- 429 716
- FR-A- 2 192 177
- GB-A- 648 903
- US-A- 3 949 052
- US-A- 3 953 570
- CHEMICAL ABSTRACTS, vol. 124, no. 16, 15.April 1996 Columbus, Ohio, US; abstract no. 206372, MARTON, ATTILA ET AL: "Process for wasteless, material- and energy saving complex processing of waste steel hardening salts contg chlorides and cyanide for recycling." XP002022730 & HU-A-69 526 (HUNG.) 28.September 1995
- CHEM ING TECHNIK, Bd. 45, Nr. 22, 1973, Seiten 1285-1289, XP002023620 W. MÜLLER ET AL.: "Die Entgiftung und Aufarbeitung aller in Salzhärtereien anfallenden festen Abfälle."
- ERZMETALL (1996), 49(7/8), 455-462 CODEN: ERZMAK;ISSN: 0044-2658, 1996, XP000615749 WIGGER, STEFAN ET AL: "Recovery of waste salts from heat treating facilities"

## Beschreibung

Die Erfindung betrifft ein Verfahren zur Wiedergewinnung der Alkali- und Erdalkalichloride aus Altsalzen, die bei der Wärmebehandlung von Stahlteilen in Salzbädern anfallen, durch Auflösen der Altsalzbestandteile in Wasser, Abtrennung des unlöslichen Rückstandes, gegebenenfalls Zerstörung der Cyanide und fraktionierte Auskristallisation der gelösten Salze.

Um die Härte beziehungsweise Verschleißfestigkeit von Stahl zu erhöhen, werden seit langem verschiedene Wärmebehandlungsverfahren eingesetzt. Unter diesen nimmt die Salzbadtechnologie, bei der die Werkstücke in Salzschmelzen behandelt werden, in der Verschleißschutztechnik eine bedeutende Stellung ein. Bei einer Reihe von Salzbadverfahren, zum Beispiel Carbonitrieren, Einsatzhärten, Aufkohlen, Glühen und Abkühlen in Salzbädern fallen chloridische Abfallsalze, sogenannte Altsalze an. Die Entstehung dieser Altsalze hat mehrere Ursachen, zum Beispiel werden Salzschmelzen bei der Stahlbehandlung durch die Werkstücke verunreinigt. Für einen reibungslosen Prozeßablauf müssen diese Verunreinigungen als Schlamm, der noch zu 60 bis 90 % aus Salzen besteht, entfernt werden. Bei den Reaktionen mit den Werkstücken werden zudem die aktiven Badkomponenten verbraucht, so daß durch Regeneratoren oder durch Zugabe von Frischsalz wieder ergänzt werden müssen. In vielen Fällen muß dazu ein Teil des verbrauchten Bades abgeschöpft und ebenfalls als Altsalz entsorgt werden.

Hauptkomponenten chloridischer Härtereialtsalze sind die Chloride der Alkali- und Erdalkalimetalle, d.h. von Natrium, Kalium, Barium und Calcium; ein geringerer Anteil der Altsalze enthält auch Kalium- und Natriumcyanid.

Bisher gelten diese Altsalze als nicht wirtschaftlich rückgewinnbar, so daß sich Bemühungen zur Entschärfung des Reststoffproblems in erster Linie auf eine Verbesserung der Deponierbarkeit und eine Teilentgiftung konzentrierten. Hierzu wurde beispielsweise ein Verfahren zur Immobilisierung eines Gemisches von Altsalz und Gips durch Erhitzen auf 850° C vorgeschlagen (DE-OS 21 50 679). Ein weiteres Verfahren zur Verbesserung der Deponierbarkeit sieht die Behandlung des Altsalzes mit Eisensulfat und Natriumsulfat bei einer Temperatur von 600 bis 900° C vor (DE-OS 38 43 285). Auch für die Entgiftung des Cyanides im Altsalz wurden in der Vergangenheit verschiedene Möglichkeiten publiziert. Ein Weg ist das Einblasen von Sauerstoff oder Wasserdampf in das geschmolzene Altsalz bei einer Temperatur von 800 bis 1000° C (DE-OS 23 40 523).

Diese Verfahren haben den gravierenden Nachteil, daß sie zum einen sehr energieintensiv sind, und zum anderen nicht die Wiedergewinnung der Salzbestandteile, sondern nur eine Vereinfachung der Deponierbarkeit als Ziel haben.

Daneben gibt es bereits Ansätze, die Wertstoffe aus den Altsalzen wiederzugewinnen. So wird verschiedentlich die Abtrennung des Bariumanteils durch eine Fällung als Bariumcarbonat oder Bariumsulfat beschrieben. Für die Gewinnung weiterer Bestandteile, wie Natriumchlorid und Kaliumchlorid, werden dagegen keine Angaben gemacht. Die Aufbereitung der gefällten Bariumverbindungen zu Bariumchlorid ist zudem mit zusätzlichen Verfahrensschritten und Kosten verbunden.

Die teilweise Wiedergewinnung von Salzbestandteilen aus Härtereialtsalzen werden in der DE-OS 24 00 318 und DE-OS 24 00 319 beschrieben. Nach der Cyanidentgiftung, die in der Schmelze bei 450 bis 550° C durchgeführt wird, wird das Altsalz mit heißem Wasser gelaugt. Der zu einem Großteil aus Bariumcarbonat bestehende Rückstand wird abgetrennt und einer weiteren Aufbereitung, zum Beispiel zu Bariumchlorid, zugeführt. Das gelöste Carbonat wird durch Zugabe von Salpetersäure zu Kohlendioxid umgewandelt und die Chloridmenge durch Verdampfen des Wassers bis auf 10 bis 15 Gew.% vermindert, wobei Nariumchlorid als Kristallisat gewonnen werden kann. Die restliche Lösung wird bei 160° C getrocknet und das Salzgemisch aus Nitrat und Nitrit sowie zwei Prozent Natrium- und Kaliumchlorid soll direkt wieder in Härtereien verwendet werden können. Auch dieses Verfahren hat jedoch Nachteile, die eine großtechnische Umsetzung verhindert haben. So werden bei der Zugabe der Salpetersäure nitrose Gase in größeren Mengen frei, die katalytisch verbrannt werden müssen. Eine Umgehung der Säurezugabe durch Einbringen von Bariumnitrat in die Lösung erfordert aber wiederum einen zusätzlichen Verfahrensschritt. Insbesondere entsprechen die Reinheiten der erhaltenen Salze nicht den Anforderungen an die Rohstoffe zur Härtesalzherstellung und sind stark von der Zusammensetzung der eingesetzten Altsalze abhängig, die starken Schwankungen unterworfen ist. Auch das gewonnene Nitrat-Nitrit-Salz ist aufgrund der schwankenden Zusammensetzung nicht direkt wieder einsetzbar, zumal die angegebene Chloridkonzentration nicht den technischen Anforderungen entspricht. Durch den Einsatz von Regeneratoren hat sich zudem in den vergangenen Jahren die Zusammensetzung der anfallenden Altsalze hin zu geringeren Cyanid- und Carbonatgehalten und größeren Chloridanteilen verändert. Diesen veränderten Rahmenbedingungen kann das beschriebene Verfahren ohne zusätzliche Verfahrensschritte nicht gerecht werden.

Verfahren zur Trennung von Alkali- und Erdalkalichloriden sind an sich bekannt. Ein Verfahren zur Aussalzung von Bariumchlorid aus Lösungen geht davon aus, daß einer erwärmten konzentrierten Bariumchloridlösung 250 g/l Natriumchlorid zugegeben werden, wodurch Bariumchlorid-2-hydrat ausfällt und nach Waschen mit einer Bariumchloridlösung das Salz in einer Reinheit von 99 bis 100 % erhalten werden kann (DE-PS-429 716). Ein weiteres Verfahren sieht eine Trennung von Natriumchlorid und Kaliumchlorid vor (GB-PS-648 903). Dabei wird ein Gemisch der beiden Salze in einer 55%igen Calciumchloridlösung bei 95° C gelöst, wobei Natriumchlorid ausfällt. Zu der verbleibenden Lösung wird weiteres festes Calciumchlorid gegeben und diese Lösung bei 95° C soweit eingedampft, daß ein Doppelsalz aus Calcium- und Kaliumchlorid auskristallisiert. Dieses Doppelsalz wird danach mit einer 27%igen Calciumchloridlösung bei 38° C gelöst und diese Lösung auf 15° C abgekühlt, wobei Kaliumchlorid auskristallisiert. Beide Verfahren lassen sich jedoch nicht direkt auf das Härtesalzproblem übertragen, da hier mit sehr unterschiedlichen Zusammensetzungen der Lösung gerechnet werden muß und dadurch andere Verfahrensbedingungen vorhanden sind.

Es war daher Aufgabe der vorliegenden Erfindung, ein Verfahren zur Wiedergewinnung der Alkali- und Erdalkalichloride aus Altsalzen zu entwickeln, die bei der Wärmebehandlung von Stahlteilen in Salzbädern anfallen, durch Auflösen der Altsalzbestandteile in Wasser, Abtrennung des unlösichen Rückstands, gegebenenfalls Zerstörung der Cyanide und fraktionierte Auskristallisation der gelösten Salze, wobei dieses Verfahren auf alle Altsalzzusammensetzungen anwendbar und alle Altsalzbestandteile wiedergewinnbar sein sollten.

Diese Aufgabe wird erfindungsgemäß dadurch gelöst, daß aus dem Rückstand durch Zugabe von Salzsäure das Bariumcarbonat als Bariumchlorid abgetrennt und der Salzlösung zugeführt wird, daß aus der Salzlösung durch Zugabe von Natriumchlorid und Calziumchlorid im Verhältnis 1:1 bis 5:1 bei Temperaturen von -5 bis +20° C das Bariumchlorid auskristallisiert wird, wobei auf 300 g/l Altsalz in der Lösung 150 bis 350 g Natriumchlorid und 30 bis 150 g Calziumchlorid zugesetzt werden, daß durch Zugabe von Calziumchlorid bis zum Erreichen einer Konzentration von 150 bis 400 g/l bei einer Temperatur von 40 bis 120° C das Natriumchlorid auskristallisiert wird,
daß durch Einengen der Lösung bei 60 bis 120° C bis zu einer Konzentration von 500 bis 900 g Calziumchlorid pro Liter restliches Natriumchlorid und Bariumchlorid auskristallisiert wird,
daß durch weiteres Einengen der Lösung bei 60 bis 120° C ein Kaliumchlorid-Calziumchlorid-Doppelsalz auskristallisiert wird, das Doppelsalz bei 35-40° C in einer 20 bis 35%igen Calziumchloridlösung aufgelöst und das Kaliumchlorid bei 5 bis 20° C auskristallisiert wird,
und daß aus der restlichen Lösung durch Eindampfen das Calziumchlorid gewonnen wird.

Falls die Altsalze Cyanide enthalten, müssen diese oxidativ durch anodische Oxidation oder durch Zugabe von Wasserstoffperoxid zerstört werden.

Es wurde gefunden, daß nach einer Zerkleinerung der festen chloridischen Härtereialtsalze auf eine Korngröße von vorteilhaft kleiner 2 mm durch eine Laugung von 15 kg bis 50 kg Altsalz in 100 Liter Wasser die löslichen Salzbestandteile vollständig aus dem Feststoff entfernt werden können. Anschließend wird durch anodische Oxidation oder Zugabe von Wasserstoffperoxid, vorteilhaft mit einer Kombination aus beiden Verfahren, eine vollständige Cyanidentgiftung der Suspension erreicht. Durch freiwerdendes Kohlendioxid und Stickstoff bildet sich bei den hohen Salzkonzentrationen ein stabiler Schaum, dessen Volumen ein vielfaches der Lösungsmenge ausmachen kann. Es wurde gefunden, daß dieser Schaum durch Zugabe von 0,1 bis 100 ml Entschäumerlösung vermieden bzw. zerstört werden kann. Die unlöslichen Bestandteile, bestehend aus Bariumcarbonat und Verunreinigungen aus dem Härtereibetrieb, im wesentlichen Eisenoxide, werden beispielsweise durch den Zuatz von Flockungsmitteln bei einem pH-Wert von 8,5 bis 12 von der Lösung abgetrennt, wobei die Restkonzentration an Flockungsmittel in der Lösung auch bei einer Überdosierung von 50 Prozent unter 2 ppm liegt. Nach dem Umsetzen des Bariumcarbonats mit Salzsäure zu Bariumchlorid läßt sich der Eisenoxidschlamm, zum Beispiel in einer Filterpresse, bis auf eine Restfeuchte von 30 bis 35 Prozent entwässern. Nach dem Waschen mit Wasser enthält der Filterkuchen keine Salzbestandteile mehr und kann aufgrund seiner geringen Restfeuchte problemlos deponiert werden.

Aus den abgetrennten Salzlösungen werden nach einer Neutralisation mit Salzsäure durch gezielte Zugabe von Reagenzien und spezielle Abfolge der Kristallisationsschritte die einzelnen Komponenten selektiv abgetrennt. Dadurch wird erreicht, daß das Verfahren für Salze unterschiedlicher Zusammensetzung gleichbleibende Produkte hoher Reinheit liefert.

Für die Gewinnung von Bariumchlorid wurde gefunden, daß entgegen der üblichen Aussalzung mit Natriumchlorid durch zusätzliche Zugabe von Calciumchlorid eine Erhöhung des Ausbringens und der Reinheit erreicht werden kann. Gleichzeitig wird damit erreicht, daß für den nächsten Kristallisationsschritt, die Aussalzung von Natriumchlorid, definierte Bedingungen geschaffen werden. Durch Zugabe von 150 bis 350 g, vorteilhaft 200 bis 250 g festem Natriumchlorid und 60 bis 300 g ca. 50%iger Calciumchloridlösung zu einem Liter Altsalzlösung wird bei Abkühlung auf eine Temperatur zwischen -5° C und 20° C, vorzugsweise 0° C bis 15° C Bariumchlorid selektiv bis auf einen Restgehalt von 1 bis 2 Gew.% auskristallisiert; das Kristallisat besitzt zudem eine hohe Reinheit, im allgemeinen besser als 99 %. Das Gewichtsverhältnis der zugegebenen Salze (das heißt NaCl:CaCl₂) liegt in Abhängigkeit von dem Calciumchloridgehalt der Altsalzlösung zwischen 1:1 und 5:1, vorteilhaft bei 3:1 und kann durch Messung zum Beispiel mit ionenselektiven Elektroden gesteuert werden.

Weiterhin wurde gefunden, daß durch anschließende Zugabe von Calciumchlorid bis zum Erreichen einer Calciumchloridkonzentration von 150 bis 400 g/l bei einer Temperatur zwischen 40° C und 120° C reines Natriumchlorid selektiv auskristallisiert werden kann, während das Bariumchlorid in der Lösung verbleibt.

Durch Konzentrieren dieser Lösung, vorzugsweise in einem Vakuumkristallisator bei einer Temperatur zwischen 60° C und 120° C, insbesondere bei 80° C bis 100° C, wird die Konzentration an Calciumchlorid bis auf 500 bis 900 g/l erhöht. Es wurde weiterhin gefunden, daß das restliche Natriumchlorid bis auf weniger als 0,5 Gew.% und das Bariumchlorid nahezu vollständig, das heißt bis auf Spuren in ppm-Bereich, auskristallisieren. Dieses Salzgemisch kann wiederum der ersten Kristallisationsstufe zugeführt werden, so daß bei diesem Verfahren das gesamte Bariumchlorid zu über 99,9 Prozent zurückgewonnen werden kann.

Aus der zurückbleibenden Lösung kann Kaliumchlorid in bekannter Weise abgetrennt werden, indem die Lösung bei 60 bis 120° C, insbesondere 80 bis 110° C, weiter konzentriert wird, bis Calciumchlorid-Kaliumchlorid als Doppelsalz auskristallisiert. Die Mutterlauge wird abgetrennt und zwischengelagert. Von dieser Lösung wird ein Teil im Verhältnis von 1:1 mit Wasser verdünnt. In dieser verdünnten Lösung, in der sich eine Konzentration von 20 bis 35 Prozent Calciumchlorid und 0,5 bis 1,5 Prozent Kaliumchlorid ergibt, wird bei 35 bis 40° C, vorzugsweise bei 38° C, das Doppelsalz gelöst. Durch Abkühlen der Lösung auf 5 bis 20° C, insbesondere 10° C bis 15° C, kristallisiert reines Kaliumchlorid aus. Die verbleibende Calciumchloridlösung wird teilweise in vorhergehenden Prozeßschritten eingebracht, aus der restlichen Lösung wird durch Eindampfen, insbesondere Sprühtrocknen, das Calciumchlorid zurückgewonnen.

Alle auskristallisierten Salze, insbesondere auch die kristallwasserhaltigen Salze Bariumchlorid-2-hydrat und Calciumchlorid-2-hydrat werden durch geeignete Trocknung in eine wasserfreie Form mit einer Restfeuchte kleiner 0,1 % überführt.

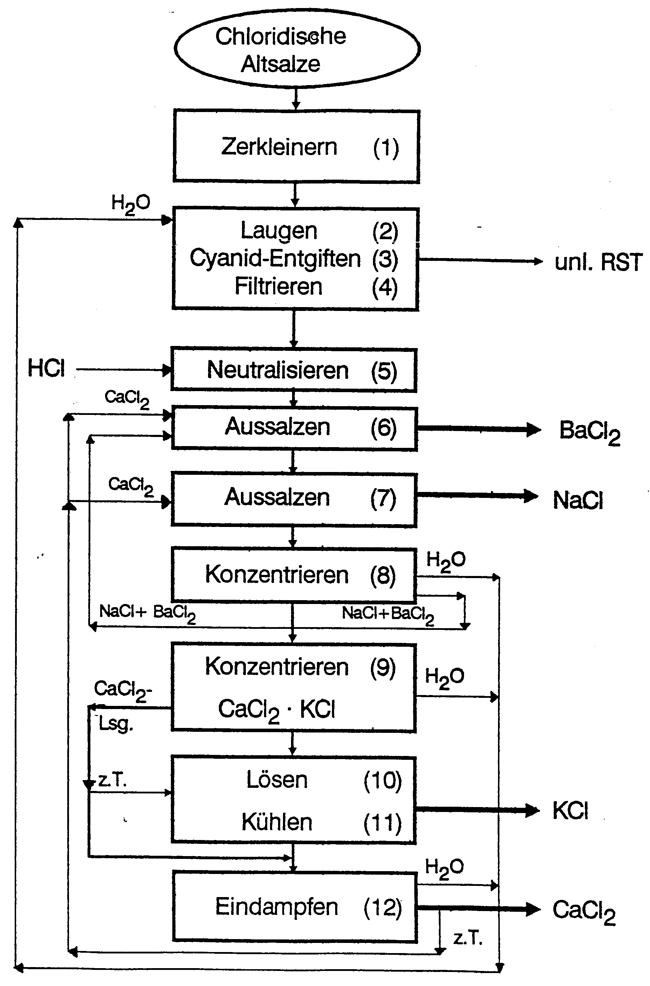

Die Abbildung zeigt ein Fließschema des erfindungsgemäßen Verfahrens, in dem der Ablauf der einzelnen Verfahrensschritte dargestellt ist. Nach der Zerkleinerung (1) der Altsalze erfolgt die Laugung (2) mit Wasser. Eine anschließende Cyanidentgiftung (3) ist die Voraussetzung für die Abtrennung der Verunreinigungen mittels Fest-Flüssig-Trennung, zum Beispiel Filtration (4). Aus der neutralisierten Lösung (5) wird Bariumchlorid durch Zugabe von Natriumchlorid ausgesalzen (6). Durch Zugabe von heißgesättigter Calciumchloridlösung kann Natriumchlorid auskristallisiert werden (7). Durch Konzentrieren der Lösung erhält man ein Gemisch aus Natriumchlorid und Bariumchlorid (8), das in Schritt 6 wieder eingesetzt wird. Kaliumchlorid wird durch Konzentrieren der Lösung (9), Lösen des dabei auskristallisierten Doppelsalzes CaCl₂-KCl in verdünnter Calciumchloridlösung (10) und anschließendem Abkühlen der Lösung (11) abgetrennt. Das Calciumchlorid erhält man nach Eindampfen der verbleibenden Lösung (12).

Folgende Beispiele sollen das erfindungsgemäße Verfahren näher erläutern:
1. Es werden 100 kg eines cyanidfreien Altsalzes auf eine Korngröße kleiner 2 mm zerkleinert und in 300 l Wasser gelaugt. Durch Zugabe von 7,9 kg 37%iger Salzsäure werden Carbonat und Hydroxid neutralisiert. Anschließend wird mit Natriumhydroxid ein pH-Wert von 9,5 eingestellt. Die Verunreinigungen werden durch Zugabe von 1000 ml 0,1%iger polymerer Flockungsmittellösung ausgeflockt und die Altsalzlösung von den Verunreinigungen durch Filtration getrennt. Danach wird Bariumchlorid durch Zugabe von 39,3 kg Salzgemisch aus der Verdampfungskristallisation, bestehend zu 87% aus Natriumchlorid und zu 13 % aus Bariumchlorid, sowie 0,8 kg Natriumchlorid und 12,2 kg Calciumchlorid bei 0° C auskristallisiert und abfiltriert. Der auf 50° C erwärmten Lösung wird 39 kg Calciumchlorid zugegeben und das auskristallisierte Natriumchlorid abfiltriert. Anschließend wird die Lösung bei 90° C eingedampft, bis 175 Liter Kondensat angefallen sind und das auskristallisierte Salzgemisch aus Natriumchlorid und Bariumchlorid abgetrennt. Die Lösung mit einer Calciumchloridkonzentration von 600 g/l wird bei 100° C konzentriert, bis weitere 46 Liter Kondensat aufgefangen sind. Das auskristallisierte Doppelsalz aus Calciumchlorid und Kaliumchlorid wird abgetrennt. 5 Liter der konzentrierten Lösung werden mit 15 Liter Wasser verdünnt und darin das Doppelsalz bei 38° C gelöst. Durch Abkühlen dieser Lösung auf 10° C kristallisiert das Kaliumchlorid aus und wird abfiltriert. Die Calciumchloridlösung wird abschließend sprühgetrocknet.
Die Massenbilanz der Aufbereitung ergibt folgendes Ergebnis:

| Verbindung | Anteil im Altsalz | Produktmenge | Produktreinheit |
|---|---|---|---|
| BaCl₂ | 56,9 % | 57,2 kg | 99,0 % |
| CaCl₂ | 20,6 % | 24,5 kg | 97,0 % |
| NaCl | 10,1 % | 11,8 kg | 98,7 % |
| KCl | 2,6 % | 2,0 kg | 97,7 % |
| NaOH | 2,0 % | 0,0 kg | - |
| CaCO₃ | 3,0 % | 0,0 kg | - |
| Fe₃O₄ (Rückstand) | 4,8 % | 7,0 kg | 32 % Restfeuchte |

2. Die Abfolge der Verfahrensschritte entspricht der in Beispiel 1 genannten, mit dem Unterschied, daß sich direkt an die Laugung eine Umwandlung des Cyanids durch anodische Oxidation anschließt. 100 kg des cyanidhaltigen Altsalzes werden auf eine Korngröße kleiner 2 mm zerkleinert und in 300 l Wasser gelaugt. Danach wird das Cyanid in der Altsalzlösung bei einem pH-Wert von 11 mit Hilfe einer Oxidationselektrolysezelle zu Cyanat oxidiert und anschließend nach Absenken des pH-Wertes auf 8,5 das Cyanat zu Kohlendioxid und Stickstoff weiteroxidiert. Durch Zugabe von 18,2 kg 37%iger Salzsäure werden Carbonat und Hydroxid neutralisiert. Mit Natriumhydroxid wird ein pH-Wert von 9,5 eingestellt, so daß die Verunreinigungen durch Zugabe von 1800 ml 0,1 %igem polymeren Flockungsmittel ausgeflockt und die Verunreinigungen aus der Lösung durch Filtration abgetrennt werden können. Danach wird Bariumchlorid durch Zugabe von 38,3 kg Salzgemisch aus der Verdampfungskristallisation, bestehend zu 87% aus Natriumchlorid und zu 13 % aus Bariumchlorid, 0,8 kg Natriumchlorid und 25 kg Calciumchlorid bei 0° C auskristallisiert und abfiltriert. Der auf 60° C erwärmten Lösung werden 30 kg Calciumchlorid zugegeben und das auskristallisierte Natriumchlorid abfiltriert. Anschließend wird die Lösung bei 90° C eingedampft, bis 190 Liter Kondensat aufgefangen sind, und das auskristallisierte Salzgemisch aus Natriumchlorid und Bariumchlorid abgetrennt. Die Lösung, die eine Calciumchloridkonzentration von 600 g/l hat, wird bei 100° C konzentriert, bis weitere 47 Liter Kondensat aufgefangen wurden. Das auskristallisierte Doppelsalz aus Calciumchlorid und Kaliumchlorid wird abgetrennt. 20 Liter der konzentrierten Lösung werden mit 40 Liter Wasser verdünnt und darin das Doppelsalz bei 38° C gelöst. Durch Abkühlen der Lösung auf 10° C kristallisiert das Kaliumchlorid aus und wird abfiltriert. Die Calciumchloridlösung wird abschließend sprühgetrocknet.
Die Massenbilanz zeigt wiederum die hohen Reinheiten und das vollständige Ausbringen der Salze.

| Verbindung | Anteil im Altsalz | Produktmenge | Produktreinheit |
|---|---|---|---|
| BaCl₂ | 39,9 kg | 55,5 kg | 98,5 % |
| CaCl₂ | 10,6 kg | 11,0 kg | 96,1 % |
| NaCl | 13,1 kg | 13,5 kg | 99,1 % |
| Kcl | 10,6 kg | 13,2 kg | 98,6 % |
| NaOH | 0,9 kg | 0,0 kg | - |
| BaCO₃ | 14,0 kg | 0,0 kg | - |
| KCN | 2,1 kg | 0,0 kg | - |
| Fe₃O₄ (Rückstand) | 8,8 kg | 12,8 kg | 31 % Restfeuchte |

3. Es werden 100 kg eines cyanidhaltigen Altsalzes auf eine Korngröße kleiner 2 mm zerkleinert und in 300 l Wasser gelaugt. Danach wird das Cyanid in der Altsalzlösung bei einem pH-Wert von 11 mit Hilfe einer Oxidationselektrolysezelle zu Cyanat oxidiert und anschließend nach Absenken des pH-Wertes auf 8,5 das Cyanat zu Kohlendioxid und Stickstoff weiteroxidiert. Durch Zugabe von 23,8 kg 37%iger Salzsäure werden Carbonat und Hydroxid neutralisiert. Anschließend wird mit Natriumhydroxid ein pH-Wert von 9,5 eingestellt. Die Verunreinigungen werden durch Zugabe von 950 ml 0,1%iger polymerer Flockungsmittellösung ausgeflockt und die Lösung von den Verunreinigungen durch Filtration getrennt.
Danach wird Bariumchlorid durch Zugabe von 36,2 kg Salzgemisch aus der Verdampfungskristallisation, bestehend zu 87% aus Natriumchlorid und zu 13 % aus Bariumchlorid, und 28,5 kg Calciumchlorid bei 0° C auskristallisiert und abfiltriert. Der auf 60° C erwärmten Lösung werden 39 kg Calciumchlorid zugegeben und das auskristallisierte Natriumchlorid abfiltriert. Anschließend wird die Lösung bei 100° C soweit eingedampft, bis 185 Kondensat aufgefangen sind, und das auskristallisierte Salzgemisch aus Natriumchlorid und Bariumchlorid wird abgetrennt. Die Lösung, die eine Calciumchloridkonzentration von 600 g/l hat, wird bei 100° C konzentriert, bis weitere 48 Liter Kondensat aufgefangen sind. Das auskristallisierte Doppelsalz aus Calciumchlorid und Kaliumchlorid wird abgetrennt. 20 Liter der konzentrierten Lösung werden mit 30 Liter Wasser verdünnt und darin das Doppelsalz bei 38° C gelöst. Durch Abkühlen der Lösung auf 10° C kristallisiert das Kaliumchlorid aus und wird abfiltriert. Die Calciumchloridlösung wird abschließend sprühgetrocknet.
Die Massenbilanz der Aufbereitung ergab folgendes Ergebnis.

| Verbindung | Anteil im Altsalz | Produktmenge | Produkteinheit |
|---|---|---|---|
| BaCl₂ | 26,3 % | 54,5 kg | 99,3 % |
| CaCl₂ | 1,5 % | 1,3 kg | 96,7 % |
| NaCl | 24,8 % | 26,5 kg | 97,6 % |
| KCl | 7,3 % | 17,4 kg | 98,0 % |
| NaOH | 1,1 % | 0,0 kg | - |
| BaCO₃ | 26,2 % | 0,0 kg | - |
| KCN | 8,4 % | 0,0 kg | - |
| Fe₃O₄ (Rückstand) | 4,4 % | 7,0 kg | 33 % Restfeuchte |

4. Es wird das cyanidfreie Altsalz aus Beispiel 1 aufbereitet, wobei von den erfindungsgemäßen Kristallisationstemperaturen abgewichen wird. Die weiteren Kristallisationsbedingungen, wie Konzentration der zugegebenen Salze und die Kristallisationsdauer, werden soweit möglich gleich gehalten. Es werden 100 kg des cyanidfreien Altsalzes auf eine Korngröße kleiner 2 mm zerkleinert und in 300 l Wasser gelaugt. Durch Zugabe von 7,9 kg 37%iger Salzsäure werden Carbonat und Hydroxid neutralisiert. Anschließend wird mit Natriumhydroxid ein pH-Wert von 9,5 eingestellt. Die Verunreinigungen werden durch Zugabe von 1000 ml 0,1%iger polymerer Flockungsmittellösung ausgeflockt und die Altsalzlösung von den Verunreinigungen durch Filtration getrennt. Danach wird Bariumchlorid durch Zugabe von 33,9 kg Salzgemisch aus der Verdampfungskristallisation, bestehend zu 92 % aus Natriumchlorid und zu 8 % aus Bariumchlorid, sowie 3,9 kg Natriumchlorid und 12,2 kg Calciumchlorid bei 25° C auskristallisiert und abfiltriert. Der auf 30° C erwärmten Lösung wird 39 kg Calciumchlorid zugegeben und das auskristallisierte Natriumchlorid abfiltriert. Anschließend wird die Lösung bei 100° C eingedampft, bis 175 Liter Kondensat angefallen sind und das auskristallisierte Salzgemisch aus Natriumchlorid und Bariumchlorid abgetrennt. Die Lösung mit einer Calciumchloridkonzentration von 600 g/l wird bei 100° C konzentriert, bis weitere 46 Liter Kondensat aufgefangen sind. Das auskristallisierte Doppelsalz aus Calciumchlorid und Kaliumchlorid wird abgetrennt. 5 Liter der konzentrierten Lösung werden mit 15 Liter Wasser verdünnt und darin das Doppelsalz bei 38° C gelöst. Durch Abkühlen dieser Lösung auf 25° C kristallisiert das Kaliumchlorid aus und wird abfiltriert. Die Calciumchloridlösung wird abschließend sprühgetrocknet.
Die Massenbilanz der Aufbereitung ergibt folgendes Ergebnis, das ein deutlich schlechteres Ausbringen des Bariumchlorides und geringe Reinheiten, insbesondere beim Natriumchlorid zeigt:

| Verbindung | Anteil im Altsalz | Produktmenge | Produktreinheit |
|---|---|---|---|
| BaCl₂ | 56,9 % | 51,3 kg | 99,1 % |
| CaCl₂ | 20,6 % | 25,6 kg | 93,0 % |
| NaCl | 10,1 % | 16,5 kg | 73,5 % |
| Kcl | 2,6 % | 2,1 kg | 96,5 % |
| NaOH | 2,0 % | 0,0 kg | - |
| CaCO₃ | 3,0 % | 0,0 kg | - |
| Fe₃O₄ (Rückstand) | 4,8 % | 7,0 kg | 32 % Restfeuchte |

## Patentansprüche

1. Verfahren zur Wiedergewinnung der Alkali- und Erdalkalichloride aus Altsalzen, die bei der Wärmebehandlung von Stahlteilen in Salzbädern anfallen, durch Auflösen der Altsalzbestandteile in Wasser, Abtrennung des unlöslichen Rückstandes, gegebenenfalls Zerstörung der Cyanide und fraktionierte Auskristallisation der gelösten Salze,
**dadurch gekennzeichnet**,
daß aus dem Rückstand durch Zugabe von Salzsäure das Bariumcarbonat als Bariumchlorid abgetrennt und der Salzlösung zugeführt wird,
daß aus der Salzlösung durch Zugabe von Natriumchlorid und Calziumchlorid im Verhältnis 1:1 bis 5:1 bei Temperaturen von -5 bis +20° C das Bariumchlorid auskristallisiert wird, wobei auf 300 g/l Altsalz in der Lösung 150 bis 350 g Natriumchlorid und 30 bis 150 g Calziumchlorid zugesetzt werden,
daß durch Zugabe von Calziumchlorid bis zum Erreichen einer Konzentration von 150 bis 400 g/l bei einer Temperatur von 40 bis 120° C das Natriumchlorid auskristallisiert wird,
daß durch Einengen der Lösung bei 60 bis 120° C bis zu einer Konzentration von 500 bis 900 g Calziumchlorid pro Liter restliches Natriumchlorid und Bariumchlorid auskristallisiert wird,
daß durch weiteres Einengen der Lösung bei 60 bis 120° C ein Kaliumchlorid-Calziumchlorid-Doppelsalz auskristallisiert wird, das Doppelsalz bei 35 bis 40° C in einer 20 bis 35%igen Calziumchloridlösung aufgelöst und das Kaliumchlorid bei 5 bis 20° C auskristallisiert wird,
und daß aus der restlichen Lösung durch Eindampfen des Calciumchlorid gewonnen wird.

2. Verfahren nach Anspruch 1
**dadurch gekennzeichnet**,
daß Cyanide durch anodische Oxidation und/oder durch Zugabe von Wasserstoffperoxid zerstört werden.

## Claims

1. A process for the recovery of the alkali metal chlorides and alkaline earth metal chlorides from waste salts which accumulate in salt baths during the heat treatment of steel parts, by dissolving the waste salt components in water, separation off of the insoluble residue, decomposition of the cyanides if necessary and fractional crystallisation of the dissolved salts, characterised in that
the barium carbonate is separated off from the residue as barium chloride by addition of hydrochloric acid and is added to the salt solution,
the barium chloride is crystallised out from the salt solution at temperatures of -5°C to +20°C by addition of sodium chloride and calcium chloride in the ratio of 1:1 to 5:1, with 150 to 350 g sodium chloride and 30 to 150 g calcium chloride being added per 300 g/l waste salt in the solution,
the sodium chloride is crystallised out at a temperature of 40°C to 120°C by addition of calcium chloride until a concentration of 150 to 400 g/l is obtained,
remaining sodium chloride and barium chloride is crystallised out by evaporating the solution at 60°C to 120°C to a concentration of 500 to 900 g calcium chloride per litre,
a potassium chloride-calcium chloride double salt is crystallised out by further evaporation of the solution at 60°C to 120°C, the double salt is dissolved at 35°C to 40°C in a 20 to 35% calcium chloride solution and the potassium chloride is crystallised out at 5°C to 20°C
and the calcium chloride is recovered from the remaining solution by evaporation.

2. A process according to claim 1,
characterised in that cyanides are decomposed by anodic oxidation and/or by addition of hydrogen peroxide.

## Revendications

1. Procédé de récupération des chlorures de métaux alcalins et alcalino-terreux à partir de sels usés qui apparaissent lors du traitement thermique des pièces d'acier dans les bains salins, par dissolution des composants de sels usés, séparation du résidu insoluble, le cas échéant destruction des cyanures et cristallisation fractionnelle des sels dissous, caractérisé en ce qu'
- à partir du résidu, par addition d'acide chlorhydrique, on sépare le carbonate de baryum sous forme de chlorure de baryum et on l'ajoute à la solution saline,
- à partir de la solution saline, par addition de chlorure de sodium et de chlorure de calcium dans un rapport de 1:1 à 1:5 à des températures comprises entre -5 et +20°C, on cristallise le chlorure de baryum, en ajoutant à 300 g/l de sel usé dans la solution 150 à 350 g de chlorure de sodium et 30 à 150 g de chlorure de calcium,
- après addition de chlorure de calcium jusqu'à l'obtention d'une concentration de 150 à 400 g/l à une température de 40 à 120°C on sépare par cristallisation le chlorure de sodium,
- par concentration de la solution entre 60 et 120°C jusqu'à une concentration de 500 à 900 g de chlorure de calcium/litre on sépare par cristallisation le chlorure de sodium et le chlorure de baryum résiduels,
- en poursuivant la concentration de la solution entre 60 et 120°C on sépare par cristallisation un sel double de chlorure de potassium-chlorure de calcium, en ce qu'on dissout le sel double entre 35 et 40°C dans une solution de chlorure de calcium à 20 à 35 % et en ce qu'on sépare par cristallisation le chlorure de potassium entre 5 et 20°C,
- on obtient le chlorure de calcium à partir de la solution résiduelle par concentration.

2. Procédé selon la revendication 1,
caractérisé en ce qu'
on détruit les cyanures par oxydation anodique et/ou par addition de peroxyde d'hydrogène.
